# EUROPÄISCHE PATENTSCHRIFT

(11) **EP 4 249 412 B1**
(45) Veröffentlichungstag und Bekanntmachung des Hinweises auf die Patenterteilung: **02.04.2025**
(21) Anmeldenummer: 23158926.8
(22) Anmeldetag: 28.02.2023
(51) Int. Cl.: B65G 54/02, B65G 47/52, B65G 47/71

(54) **TRANSPORTSYSTEM UND VERFAHREN ZUM TRANSPORT EINER MEHRZAHL VON BEHÄLTNISSEN**
TRANSPORT SYSTEM AND METHOD FOR TRANSPORTING A PLURALITY OF CONTAINERS
SYSTÈME DE TRANSPORT ET PROCÉDÉ DE TRANSPORT D'UNE PLURALITÉ DE RÉCIPIENTS

(30) Priorität: 23.03.2022 DE 102022106818
(43) Veröffentlichungstag der Anmeldung: 27.09.2023
(73) Patentinhaber: Syntegon Technology GmbH, 71332 Waiblingen (DE)
(72) Erfinder: Ziegler, Jochen, 74589 Satteldorf (DE); Täger, Maik, 74579 Fichtenau (DE)
(74) Vertreter: Novagraaf Group

(56) Entgegenhaltungen:
- EP-A1- 3 656 707
- WO-A1-2016/102417
- US-A1- 2022 035 345

## Beschreibung

Die Erfindung betrifft ein Transportsystem für eine Mehrzahl von Behältnissen, umfassend eine Zuführeinrichtung für einen Nachschub von Behältnissen, welche an einem Übergabeende der Zuführeinrichtung von einem Aufnahmebereich einer Arbeitsplattform eines Transportmovers aufnehmbar sind, wobei der Transportmover zwecks Bewegung in einer Arbeitsebene einen mit der Arbeitsplattform verbundenen Antriebsabschnitt aufweist, der - insbesondere berührungslos - mit einer stationären, planaren Antriebsebene zusammenwirkt. Die Erfindung betrifft ferner ein Verfahren zum Transport einer Mehrzahl von Behältnissen.

Aus der DE 10 2018 105 807 A1, der DE 10 2016 203 778 A1, der DE 10 2016 109 435 A1, der US 2015/0 068 870 A1 und aus der US 2010/0 193 327 A1 sind verschiedene Transportsysteme bekannt. Aus der US 2022/035345 A1 ist ein Transportsystem mit den Merkmalen des Oberbegriffs des Anspruchs 1 sowie ein Verfahren mit den Merkmalen des Oberbegriffs des Anspruchs 14 bekannt.

Der Erfindung liegt die Aufgabe zugrunde, ein möglichst einfach aufgebautes Transportsystem und ein möglichst einfach durchführbares Verfahren zum Transport einer Mehrzahl von Behältnissen vorzuschlagen.

Diese Aufgabe wird bei einem Transportsystem der eingangs genannten Art dadurch gelöst, dass die Arbeitsplattform eine Sperrfläche aufweist, deren Abstand zu der Antriebsebene durch Bewegung des Antriebsabschnitts des Transportmovers relativ zu der Antriebsebene veränderbar ist, wobei die Sperrfläche in einer einem kleineren Abstand zu der Antriebsebene zugeordneten Übergabeposition so niedrig angeordnet ist, dass eine Übergabe von Behältnissen von dem Übergabeende der Zuführeinrichtung über die Sperrfläche hinweg in oder auf den Aufnahmebereich der Arbeitsplattform ermöglicht ist, und wobei die Sperrfläche in einer einem größeren Abstand zu der Antriebsebene zugeordneten Sperrposition eine Übergabe von Behältnissen von dem Übergabeende der Zuführeinrichtung in oder auf den Aufnahmebereich der Arbeitsplattform sperrt.

Das erfindungsgemäße Transportsystem ermöglicht es, einen Nachschub von Behältnissen temporär zu sperren, indem die Sperrkante der Arbeitsplattform von einer Übergabeposition in eine Sperrposition überführt wird. Diese Überführung geht mit einer Bewegung des Antriebsabschnitts des Transportmovers einher; diese Bewegung wird über die Arbeitsplattform auf die Sperrfläche übertragen. Dies ermöglicht es, auf einen zusätzlichen Sperrflächen-Aktor zur Erzeugung einer Bewegung der Sperrfläche relativ zu der Arbeitsplattform verzichten zu können.

Die Veränderung des Abstands der Sperrfläche zu der Antriebsebene geht beispielsweise mit einer Vertikalbewegung des Transportmovers entlang einer zu der Antriebsebene vertikalen Hochachse des Transportmovers einher. Dieser Abstand entspricht einem freien Spalt, der zwischen dem Antriebsabschnitt des Transportmovers und der Antriebsebene ausgebildet ist und zumindest über einen Hub von wenigen Millimetern einstellbar ist.

Besonders bevorzugt ist es, wenn die Veränderung des Abstands der Sperrfläche zu der Antriebsebene mit einer Kippbewegung des Transportmovers entlang einer zu der Antriebsebene parallelen Kippachse des Transportmovers einhergeht. Eine solche Kippfunktion eines Transportmovers ist an sich bekannt und wird erfindungsgemäß dazu genutzt, den Abstand der Sperrfläche zu der Antriebsebene zu verändern, insbesondere über einen Bewegungsweg zwischen Übergabeposition und Sperrposition, der im Vergleich zu einer Bewegung nur entlang einer vertikalen Hochachse des Transportmovers vergrößert ist.

Die Arbeitsplattform erstreckt sich vorzugsweise in einer Ebene, wobei die Sperrfläche zu der Ebene winklig, insbesondere senkrecht, orientiert ist. Dies ermöglicht einen kompakten und einfachen Aufbau des Transportmovers.

Insbesondere ist es bevorzugt, dass die Sperrfläche eine Begrenzungsfläche der Arbeitsplattform ist. Dies ermöglicht eine besonders einfache Bereitstellung der Sperrfläche, welche insbesondere integraler Bestandteil der Arbeitsplattform ist. Zudem kann eine stabile und unempfindliche Sperrfläche bereitgestellt werden, welche durch einen Arbeitsplattformkörper gebildet und abgestützt ist.

Es ist ferner bevorzugt, wenn die Arbeitsplattform einen Auslegerbereich aufweist, der sich über den Antriebsabschnitt hinweg erstreckt und an welchem die Sperrfläche angeordnet ist. Bei einer Kippbewegung des Transportmovers um eine zu der Sperrfläche parallele und zu der Sperrfläche beabstandete Kippachse kann auf diese Weise ein vergrößerter Bewegungsweg der Sperrfläche zwischen der Übernahmeposition und der Sperrposition bereitgestellt werden. Dies führt in der Sperrposition der Sperrfläche dazu, dass ein Nachschub von Behältnissen besonders zuverlässig blockiert werden kann.

Bei einer weiteren Ausführungsform ist vorgesehen, dass der Aufnahmebereich eine Aufnahmefläche aufweist, auf welcher die Behältnisse anordenbar sind, und dass die Sperrfläche an die Aufnahmefläche angrenzt. Auf diese Weise kann eine Sperrwirkung der Sperrfläche unmittelbar benachbart zu dem Aufnahmebereich des Transportmovers bereitgestellt werden.

Es ist bevorzugt, dass die Sperrfläche und die Aufnahmefläche zueinander winklig, insbesondere zueinander senkrecht, orientiert sind. Dies ermöglicht eine platzsparende Trennungsmöglichkeit zwischen Behältnissen, die bereits in oder auf dem Aufnahmebereich angeordnet sind und Behältnissen, welche noch Teil des Nachschubs von Behältnissen sind.

Es ist ferner bevorzugt, dass der Aufnahmebereich Begrenzungen zur Aufnahme von vereinzelten Behältnissen aufweist, wodurch ein schonender Transport von auf dem Transportmover angeordneten Behältnissen ermöglicht wird.

Insbesondere ermöglicht der Aufnahmebereich die Aufnahme einer Reihe von Behältnissen, wobei eine Orientierung der Reihe quer, insbesondere senkrecht, zu einer Nachschubachse erstreckt, entlang welcher der Nachschub von Behältnissen dem Aufnahmebereich zugeführt wird.

Es ist ferner bevorzugt, dass die Zuführeinrichtung eine Vibrationseinrichtung zum Transport der Behältnisse in Richtung auf das Übergabeende aufweist. Dies ermöglicht einen einfachen und schonenden Transport einer Mehrzahl von Behältnissen, wobei die Zuführeinrichtung stationär angeordnet bleiben kann.

Ferner ist es möglich, dass die Zuführeinrichtung auf einem von dem Transportmover unabhängigen Zusatzmover angeordnet ist, der mit der stationären, planaren Antriebsebene zusammenwirkt. Dies ermöglicht eine Veränderung der Position und Lage des Nachschubs von Behältnissen relativ zu der Antriebsebene. Alternativ oder zusätzlich hierzu ist es möglich, dass der Transportmover die vorstehend genannte Vibrationseinrichtung bereitstellt, was beispielsweise durch eine oszillierende Änderung der Relativposition des Zusatzmovers relativ zu der Antriebsebene realisierbar ist. Dabei ist eine hochfrequente Bewegung nur entlang einer vertikalen Hochachse des Zusatzmovers denkbar und/oder Bewegungen um eine zu der Antriebsebene parallele Kippachse des Zusatzmovers.

Bei einer besonders einfach ausgestalteten Zuführeinrichtung ist diese als Förderrinne ausgebildet oder weist zumindest eine Förderrinne auf, insbesondere für den Fall, dass der Nachschub von Behältnissen dem Aufnahmebereich des Transportmovers in zueinander parallelen Reihen von Behältnissen zugeführt wird.

Besonders bevorzugt ist es, dass das Transportsystem einen weiteren Transportmover aufweist, wobei die Behältnisse von einem Aufnahmebereich einer Arbeitsplattform des weiteren Transportmovers aufnehmbar sind, wobei der weitere Transportmover zwecks Bewegung in der Arbeitsebene einen mit der Arbeitsplattform verbundenen Antriebsabschnitt aufweist, der - insbesondere berührungslos - mit der stationären, planaren Antriebsebene zusammenwirkt, wobei die Arbeitsplattform eine Sperrfläche aufweist, deren Abstand zu der Antriebsebene durch Bewegung des Antriebsabschnitts des weiteren Transportmovers relativ zu der Antriebsebene veränderbar ist, wobei die Sperrfläche in einer einem kleineren Abstand zu der Antriebsebene zugeordneten Übergabeposition so niedrig angeordnet ist, dass eine Übergabe von Behältnissen von dem Übergabeende der Zuführeinrichtung über die Sperrfläche hinweg in oder auf den Aufnahmebereich der Arbeitsplattform ermöglicht ist, und wobei die Sperrfläche in einer einem größeren Abstand zu der Antriebsebene zugeordneten Sperrposition eine Übergabe von Behältnissen von dem Übergabeende der Zuführeinrichtung in oder auf den Aufnahmebereich der Arbeitsplattform sperrt.

Die Verwendung eines weiteren Transportmovers, der ebenfalls eine Sperrfläche aufweist, deren Position zwischen einer Übergabeposition und einer Sperrposition veränderbar ist, ermöglicht eine noch flexiblere Nutzung des Transportsystems, insbesondere in Verbindung mit einem nachstehend beschriebenen Verfahren zum Transport einer Mehrzahl von Behältnissen.

Die eingangs genannte Aufgabe wird auch durch ein Verfahren zum Transport einer Mehrzahl von Behältnissen gelöst, welches die Merkmale des nebengeordneten Verfahrensanspruchs umfasst.

Bei Verwendung mehrerer Transportmover ist es möglich, dass zumindest in einem Übergangszustand eine Übergabe von Behältnissen von dem Übergabeende in oder auf den Aufnahmebereich der Arbeitsplattform durch eine Mehrzahl von benachbart angeordneter Sperrflächen unterschiedlicher Transportmover gesperrt wird. Dies hat den Vorteil, dass eine bereits mit Behältnissen befüllte Arbeitsplattform sich von dem Übergabeende der Zuführeinrichtung entfernen kann, wobei gleichzeitig die Sperrfläche eines weiteren Transportmovers die Sperrposition der Sperrfläche des bereits befüllten Transportmovers übernimmt und einen weiteren Nachschub von Behältnissen blockiert, bis die Sperrfläche des weiteren Transportmovers in ihre Übergabeposition überführt wird.

Weitere Merkmale und Vorteile der Erfindung sind Gegenstand der nachfolgenden Beschreibung und der zeichnerischen Darstellung von Ausführungsbeispielen.

In der Zeichnung zeigt
- Fig. 1: eine perspektivische Ansicht einer Ausführungsform eines Transportsystems;
- Fig. 2: eine Seitenansicht des Transportsystems gemäß Fig. 1;
- Fig. 3: eine Draufansicht des Transportsystems gemäß Fig. 1 in einer ersten Transportphase;
- Fig. 4: eine mit Fig. 3 korrespondierende Seitenansicht;
- Fig. 5: eine Draufansicht des Transportsystems gemäß Fig. 1 in einer zweiten Transportphase;
- Fig. 6: eine mit Fig. 5 korrespondierende Seitenansicht;
- Fig. 7: eine Draufansicht des Transportsystems gemäß Fig. 1 in einer dritten Transportphase;
- Fig. 8: eine mit Fig. 7 korrespondierende Seitenansicht;

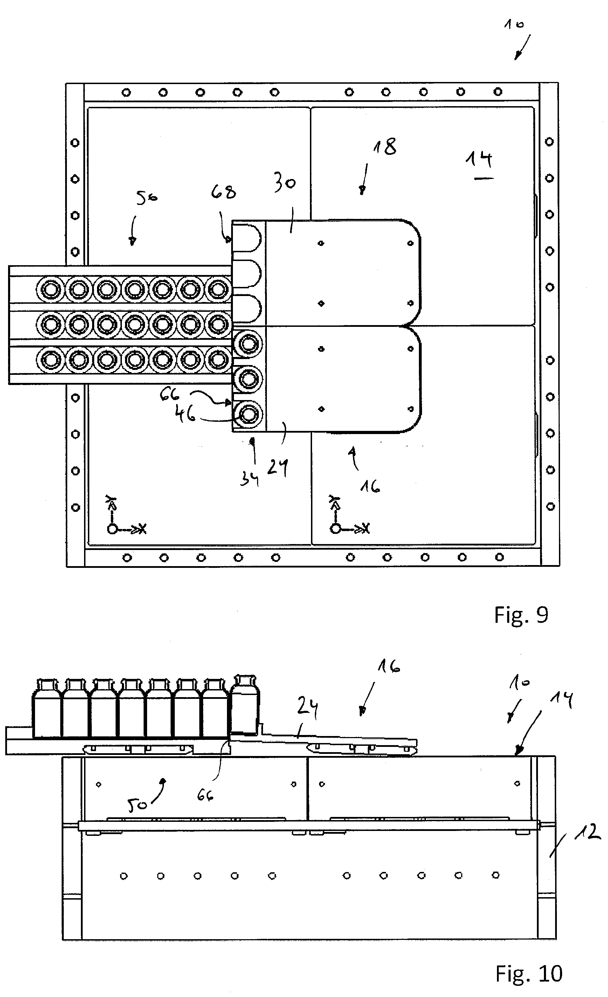

- Fig. 9: eine Draufansicht des Transportsystems gemäß Fig. 1 in einer vierten Transportphase;
- Fig. 10: eine mit Fig. 9 korrespondierende Seitenansicht;
- Fig. 11: eine Draufansicht des Transportsystems gemäß Fig. 1 nach Abschluss der vierten Transportphase; und
- Fig. 12: eine mit Fig. 11 korrespondierende Seitenansicht.

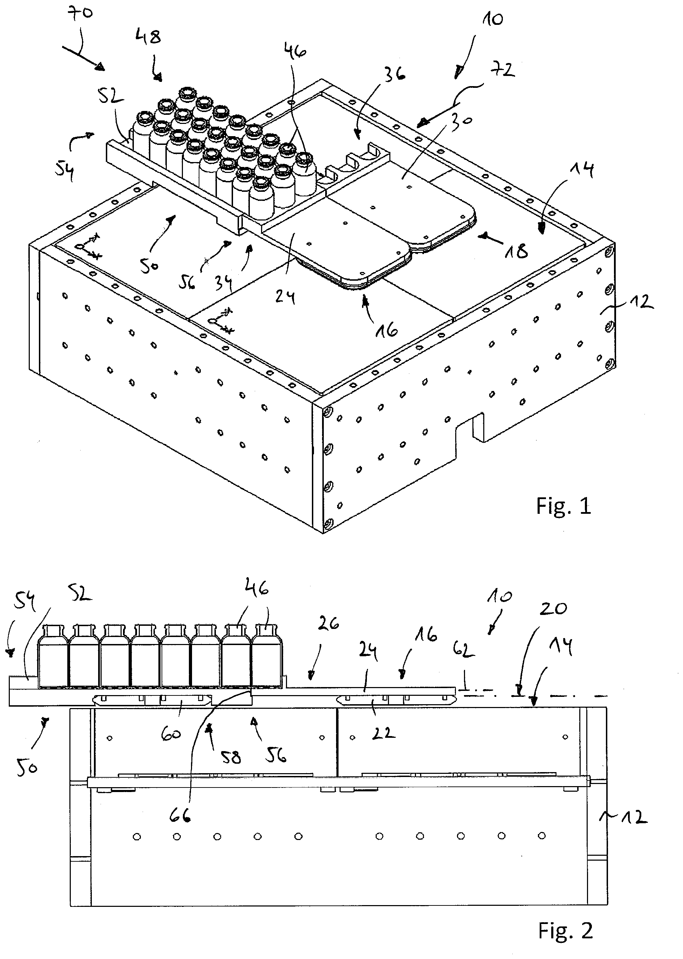

Eine Ausführungsform eines Transportsystems ist in der Zeichnung insgesamt mit dem Bezugszeichen 10 bezeichnet. Das System 10 umfasst eine stationäre Antriebseinheit 12 mit einer stationären, planaren Antriebsebene 14. Die Antriebsebene 14 dient zum berührungslosen Antrieb eines Transportmovers 16 und eines weiteren Transportmovers 18 innerhalb einer zu der Antriebsebene 14 parallelen Arbeitsebene 20, vergleiche Figur 2.

Der Transportmover 16 weist einen Antriebsabschnitt 22 auf, der eine Arbeitsplattform 24 trägt. Besonders bevorzugt weist die Arbeitsplattform 24 einen Auslegerbereich 26 auf, der den Antriebsabschnitt 22 überragt, vergleiche Figur 2.

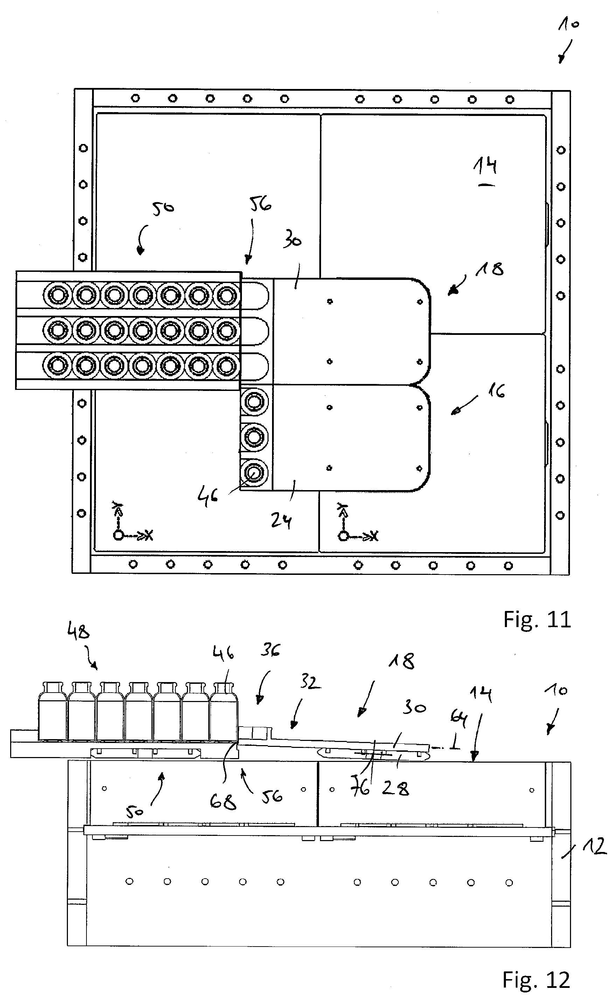

Der weitere Transportmover 18 ist vorzugsweise baugleich zu dem Transportmover 16 und weist insbesondere ebenfalls einen Antriebsabschnitt 28 auf, der mit der Antriebsebene 14 zusammenwirkt, wobei der Antriebsabschnitt 28 eine Arbeitsplattform 34 trägt, welche vorzugsweise mit einem Auslegerbereich 32 den Antriebsabschnitt 28 überragt, vergleiche Figur 12.

Die Transportmover 16 und 18 weisen jeweils einen Aufnahmebereich 34, 36 auf, der vorzugsweise in einem Randbereich der jeweiligen Arbeitsplattform 24, 30 angeordnet ist, insbesondere in einem Randbereich des jeweiligen Auslegerbereichs 26, 32.

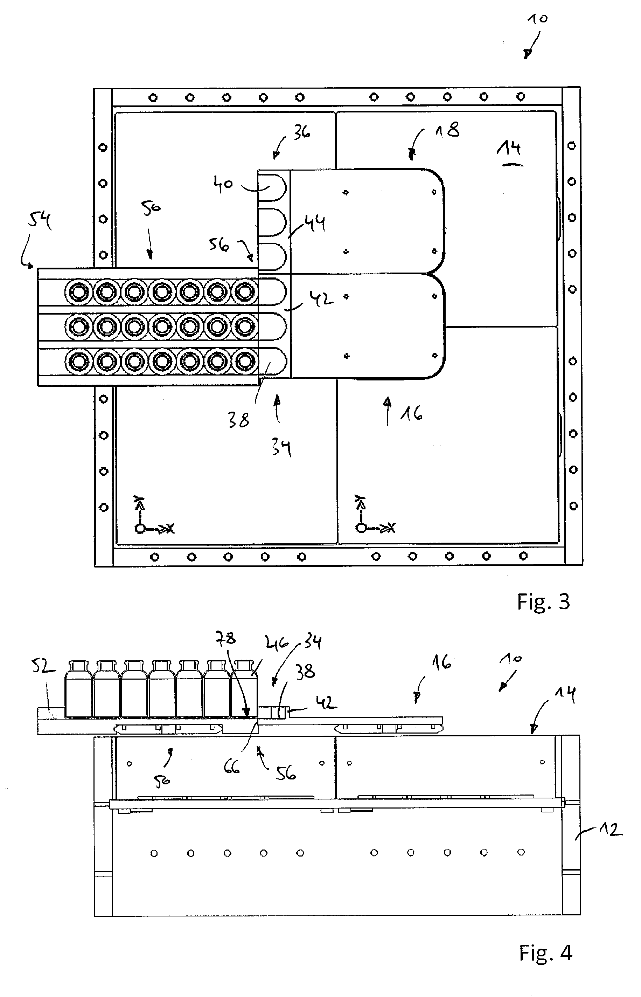

Die Aufnahmebereiche 34, 36 weisen jeweils eine Aufnahmefläche 38, 40 auf, vergleiche Figur 3. Die Aufnahmeflächen 38, 40 sind durch Begrenzungen 42, 44 in Teilflächen unterteilt, welche die Aufnahme jeweils eines Behältnisses 46 ermöglichen. Die Mehrzahl von Behältnissen 46 sind Teil eines Nachschubs 48, vergleiche Figur 1.

Die Behältnisse 46 des Nachschubs 48 sind auf einer Zuführeinrichtung 50 bereitgestellt, welche mindestens eine Förderrinne 52 zur Bereitstellung und zur Förderung von Behältnissen 46 aufweist.

Die Zuführeinrichtung 50 erstreckt sich in einer Nachschubrichtung 70 der Behältnisse 46 gesehen (vergleiche Figur 1) zwischen einem Eingang 54 und einem Übergabeende 56 zur Übergabe von Behältnissen 46 an einen Aufnahmebereich 34 oder 36 eines Transportmovers 16 oder 18 (vergleiche Figuren 2 und 3).

Die Zuführeinrichtung 50 umfasst einen Zusatzmover 58, der die mindestens eine Förderrinne 52 trägt und einen Antriebsabschnitt 60 aufweist, der ebenfalls mit der Antriebsebene 14 zusammenwirkt, vergleiche Figur 2.

Es ist möglich, dass der Zusatzmover 58 vibrierend angesteuert wird und somit eine Vibrationseinrichtung zum Transport der Behältnisse 46 entlang der Nachschubrichtung 70 und in Richtung auf das Übergabeende 56 bereitstellt.

Die Arbeitsplattformen 24, 30, der Transportmover 16, 18 erstrecken sich im Wesentlichen jeweils innerhalb einer Ebene 62, vergleiche Figur 2, bzw. 64, vergleiche Figur 12. Die jeweiligen Arbeitsplattformen 24, 30 weisen sich winklig, insbesondere senkrecht, zu den jeweiligen Ebenen 62, 64 erstreckende, umfangsseitig geschlossene Begrenzungsflächen (ohne Bezugszeichen) auf, wobei jeweils eine der Begrenzungsflächen eine Sperrfläche 66, vergleiche Figur 2, bzw. eine Sperrfläche 68, vergleiche Figur 12, bildet. Die Sperrflächen 66, 68 sind jeweils winklig, insbesondere senkrecht, zu den jeweiligen Aufnahmeflächen 38, 40 angeordnet und grenzen an diese an.

Für die nachfolgende Beschreibung der Funktionsweise des Transportsystems 10 wird unterstellt, dass sich die Behältnisses 46 des Nachschubs 48 in der Nachschubrichtung 70, von dem Eingang 54 in Richtung auf das Übergabeende 56 und darüber hinaus bewegen; für die Bewegung der Transportmover 16 und 18 wird über verschiedene Transportphasen hinweg eine dazu senkrechte Bewegungsrichtung 72, vergleiche Figur 1, angenommen.

Figuren 3 und 4 zeigen eine erste Transportphase, in welcher der Aufnahmebereich 34 des Transportmovers 16 benachbart zu dem Übergabeende 56 der Zuführeinrichtung 50 angeordnet ist. Die Aufnahmefläche 38 des Transportmovers 16 ist leer. Die Sperrfläche 66 des Transportmovers 16 befindet sich in einer Übergabeposition.

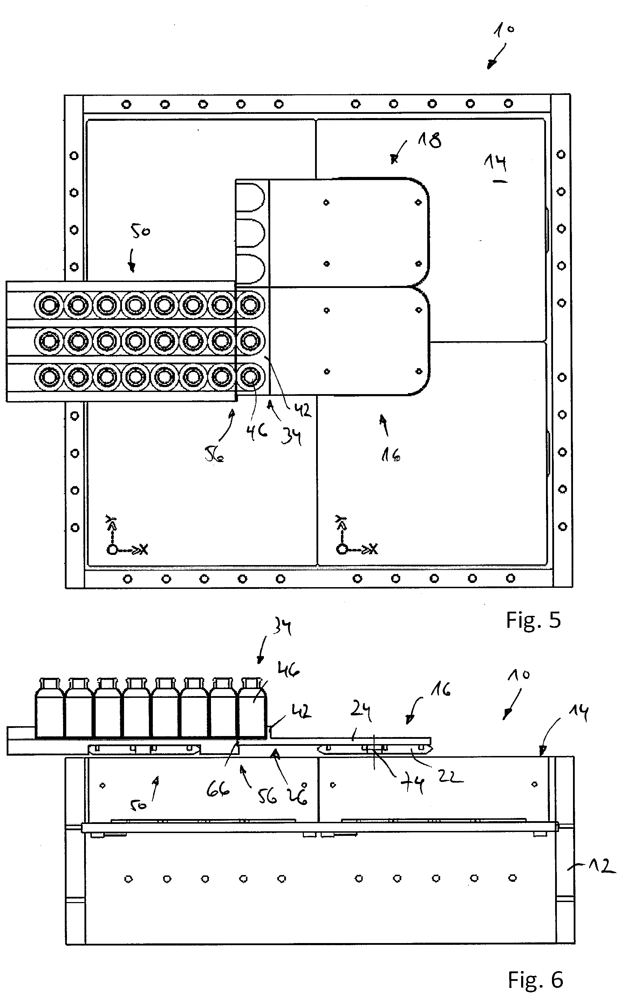

Die Aufnahmefläche 38 des Transportmovers 16 ist zumindest im Wesentlichen auf derselben Höhe angeordnet wie eine Übergabefläche 78 der mindestens einen Förderrinne 52. Gleichzeitig ist die Sperrfläche 66 so niedrig angeordnet, dass ein Behältnis 46 von der Zuführeinrichtung 50 bzw. der Förderrinne 52 von der Übergabefläche 78 über die Sperrfläche 66 hinweg in den Aufnahmebereich 34 hineingelangt, vergleiche Figuren 5 und 6.

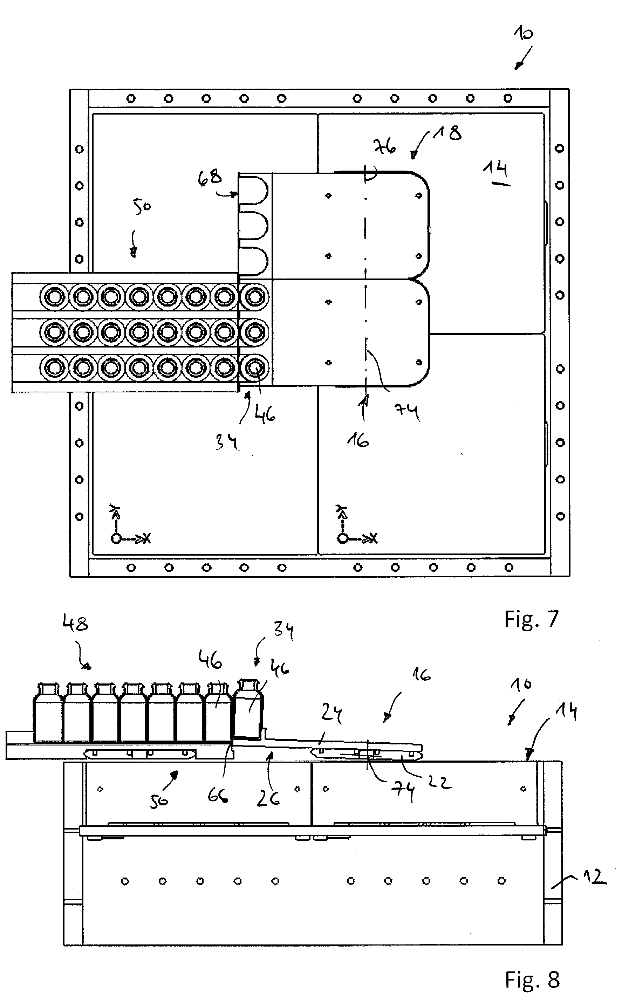

In dem Zustand gemäß Figuren 5 und 6 übt der Nachschub 48 von Behältnissen 46 weiterhin eine Kraft auf diejenigen Behältnisse 46 aus, welche bereits in dem Aufnahmebereich 34 des Transportmovers 16 angeordnet sind. Wenn in diesem Zustand der Transportmover 16 von dem Übergabeende 56 wegbewegt werden würde, besteht die Gefahr, dass nachrückende Behältnisse 46 über das Übergabeende 56 hinweg abgegeben werden würden, welche dann unkontrolliert auf die Antriebsebene 14 fallen würden. Um dies zu vermeiden, wird die Sperrfläche 66 des Transportmovers 16 in eine Sperrposition angehoben, vergleiche Figuren 7 und 8.

Zum Anheben der Sperrfläche 66 wird der Antriebsabschnitt 22 des Transportmovers 16 um eine in Figuren 6 und 8 mit dem Bezugszeichen 74 bezeichnete Kippachse verkippt. Diese Kippbewegung wird von dem Antriebsabschnitt 22 auf die Arbeitsplattform 24 und auch auf den Auslegerbereich 26 und schließlich auf die Sperrfläche 66 übertragen, bis diese ihre Sperrposition erreicht hat. In dieser Sperrposition sperrt die Sperrfläche 66 auf der Zuführeinrichtung 50 angeordnete Behältnisse 46 des Nachschubs 48 gegen eine Bewegung in Richtung auf den Aufnahmebereich 34 des Transportmovers 16.

Der weitere Transportmover 18 weist eine entsprechende Kippachse 76 auf, sodass die Sperrfläche 68 des weiteren Transportmovers 18 in entsprechender Weise zwischen einer Übergabeposition und einer Sperrposition verlagerbar ist. In dem in Figur 7 dargestellten Zustand nimmt auch die Sperrfläche 68 des weiteren Transportmovers 18 ihre (obere) Sperrposition ein.

Bei einem folgenden Abtransport der in dem Aufnahmebereich 34 des Transportmovers 16 angeordneten Behältnisse 46 bewegen sich die Transportmover 16 und 18 synchron entlang der Bewegungsrichtung 72, vergleiche Figur 1. Da sich die jeweiligen Sperrflächen 66 und 68 der beiden Transportmover 16 und 18 jeweils in ihrer Sperrposition befinden, geht eine Verlagerung des Transportmovers 16 und eine Entfernung der Sperrfläche 66 damit einher, dass die Sperrfläche 68 des weiteren Transportmovers 18 die Sperrwirkung der Sperrfläche 66 aufrechterhält und schließlich vollständig ersetzt, vergleiche Figuren 11 und 12 (in der Darstellung gemäß Figur 12 ist der Transportmover 16 mit Behältnissen 46 zwecks Darstellung des weiteren Transportmovers 18 nicht dargestellt).

In dem Zustand gemäß Figur 12 sind die Behältnisse 46 des Nachschubs 48 mittels der Sperrfläche 68 des weiteren Transportmovers 18 gegen eine Übergabe über das Übergabeende 56 hinweg gesichert. Ein Verkippen des weiteren Transportmovers 18 um dessen Kippachse 76 führt in einem in der Zeichnung nicht mehr dargestellten Folgezustand dazu, dass die Sperrfläche 68 ausgehend von der Sperrposition in eine Übergabeposition überführt wird, vergleichbar einem Zustand gemäß Figur 4, sodass anstelle des in Figur 4 dargestellten Transportmovers 16 der weitere Transportmover 18 zur Übernahme von Behältnissen 46 bereitsteht, wobei Behältnisse 46 über die Sperrfläche 68 hinweg in den Aufnahmebereich 36 des weiteren Transportmovers 18 überführt werden.

Die vorstehend erläuterten Schritte können für die Transportmover 16 und 18 jeweils abwechselnd wiederholt werden, sodass jeweils einer der Transportmover 16, 18 für eine Befüllung mit Behältnissen 46 aus dem Nachschub 48 bereitsteht und der jeweils andere der Transportmover 16, 18 für einen Abtransport einer Charge von Behältnissen 46.

## Patentansprüche

1. Transportsystem (10) für eine Mehrzahl von Behältnissen (46), umfassend eine Zuführeinrichtung (50) für einen Nachschub (48) von Behältnissen (46), welche an einem Übergabeende (56) der Zuführeinrichtung (50) von einem Aufnahmebereich (34) einer Arbeitsplattform (24) eines Transportmovers (16) aufnehmbar sind, wobei der Transportmover (16) zwecks Bewegung in einer Arbeitsebene (20) einen mit der Arbeitsplattform (24) verbundenen Antriebsabschnitt (22) aufweist, der mit einer stationären, planaren Antriebsebene (14) zusammenwirkt, **dadurch gekennzeichnet, dass** die Arbeitsplattform (24) eine Sperrfläche (66) aufweist, deren Abstand zu der Antriebsebene (14) durch Bewegung des Antriebsabschnitts (22) des Transportmovers (16) relativ zu der Antriebsebene (14) veränderbar ist, wobei die Sperrfläche (66) in einer einem kleineren Abstand zu der Antriebsebene (14) zugeordneten Übergabeposition so niedrig angeordnet ist, dass eine Übergabe von Behältnissen (46) von dem Übergabeende (56) der Zuführeinrichtung (50) über die Sperrfläche (66) hinweg in oder auf den Aufnahmebereich (34) der Arbeitsplattform (24) ermöglicht ist, und wobei die Sperrfläche (66) in einer einem größeren Abstand zu der Antriebsebene (14) zugeordneten Sperrposition eine Übergabe von Behältnissen (46) von dem Übergabeende (56) der Zuführeinrichtung (50) in oder auf den Aufnahmebereich (34) der Arbeitsplattform (24) sperrt.

2. Transportsystem (10) nach Anspruch 1, **dadurch gekennzeichnet, dass** die Veränderung des Abstands der Sperrfläche (66) zu der Antriebsebene (14) mit einer Vertikalbewegung des Transportmovers (16) entlang einer zu der Antriebsebene (14) vertikalen Hochachse des Transportmovers (16) einhergeht.

3. Transportsystem (10) nach einem der voranstehenden Ansprüche, **dadurch gekennzeichnet, dass** die Veränderung des Abstands der Sperrfläche (66) zu der Antriebsebene (14) mit einer Kippbewegung des Transportmovers (16) entlang einer zu der Antriebsebene (14) parallelen Kippachse (74) des Transportmovers (16) einhergeht.

4. Transportsystem (10) nach einem der voranstehenden Ansprüche, **dadurch gekennzeichnet, dass** sich die Arbeitsplattform (24) in einer Ebene (62) erstreckt und dass die Sperrfläche (66) zu dieser Ebene (62) winklig orientiert ist.

5. Transportsystem (10) nach einem der voranstehenden Ansprüche, **dadurch gekennzeichnet, dass** die Sperrfläche (66) eine Begrenzungsfläche der Arbeitsplattform (24) ist.

6. Transportsystem (10) nach einem der voranstehenden Ansprüche, **dadurch gekennzeichnet, dass** die Arbeitsplattform (24) einen Auslegerbereich (26) aufweist, der den Antriebsabschnitt (22) überragt und an welchem die Sperrfläche (66) angeordnet ist.

7. Transportsystem (10) nach einem der voranstehenden Ansprüche, **dadurch gekennzeichnet, dass** der Aufnahmebereich (34) eine Aufnahmefläche (38) aufweist, auf welcher die Behältnisse (46) anordenbar sind, und dass die Sperrfläche (66) an die Aufnahmefläche (38) angrenzt.

8. Transportsystem (10) nach Anspruch 7, **dadurch gekennzeichnet, dass** die Sperrfläche (66) und die Aufnahmefläche (38) zueinander winklig orientiert sind.

9. Transportsystem (10) nach einem der voranstehenden Ansprüche, **dadurch gekennzeichnet, dass** der Aufnahmebereich (34) Begrenzungen (42) zur Aufnahme von vereinzelten Behältnissen (46) aufweist.

10. Transportsystem (10) nach einem der voranstehenden Ansprüche, **dadurch gekennzeichnet, dass** die Zuführeinrichtung (50) eine Vibrationseinrichtung zum Transport der Behältnisse (46) in Richtung auf das Übergabeende (56) aufweist.

11. Transportsystem (10) nach einem der voranstehenden Ansprüche, **dadurch gekennzeichnet, dass** die Zuführeinrichtung (50) auf einem von dem Transportmover (16) unabhängigen Zusatzmover (58) angeordnet ist, der mit der stationären, planaren Antriebsebene (14) zusammenwirkt.

12. Transportsystem (10) nach einem der voranstehenden Ansprüche, **dadurch gekennzeichnet, dass** die Zuführeinrichtung (50) als Förderrinne (52) ausgebildet ist oder mindestens eine Förderrinne (52) aufweist.

13. Transportsystem (10) nach einem der voranstehenden Ansprüche, **dadurch gekennzeichnet, dass** das Transportsystem (10) einen weiteren Transportmover (18) aufweist, wobei die Behältnisse von einem Aufnahmebereich (36) einer Arbeitsplattform (30) des weiteren Transportmovers (18) aufnehmbar sind, wobei der weitere Transportmover (18) zwecks Bewegung in der Arbeitsebene (20) einen mit der Arbeitsplattform (30) verbundenen Antriebsabschnitt (28) aufweist, der mit der stationären, planaren Antriebsebene (14) zusammenwirkt, wobei die Arbeitsplattform (30) eine Sperrfläche (68) aufweist, deren Abstand zu der Antriebsebene (14) durch Bewegung des Antriebsabschnitts (28) des weiteren Transportmovers (18) relativ zu der Antriebsebene (14) veränderbar ist, wobei die Sperrfläche (68) in einer einem kleineren Abstand zu der Antriebsebene (14) zugeordneten Übergabeposition so niedrig angeordnet ist, dass eine Übergabe von Behältnissen (46) von dem Übergabeende (56) der Zuführeinrichtung (50) über die Sperrfläche (68) hinweg in oder auf den Aufnahmebereich (36) der Arbeitsplattform (30) ermöglicht ist, und wobei die Sperrfläche (68) in einer einem größeren Abstand zu der Antriebsebene (14) zugeordneten Sperrposition eine Übergabe von Behältnissen (46) von dem Übergabeende (56) der Zuführeinrichtung (50) in oder auf den Aufnahmebereich (36) der Arbeitsplattform (30) sperrt.

14. Verfahren zum Transport einer Mehrzahl von Behältnissen (46), bei welchem eine Zuführeinrichtung (50) einen Nachschub (48) von Behältnissen (46) bereitstellt, welche an einem Übergabeende (56) der Zuführeinrichtung (50) von einem Aufnahmebereich (34) einer Arbeitsplattform (24) eines Transportmovers (16) aufgenommen werden, wobei der Transportmover (16) zwecks Bewegung in einer Arbeitsebene (20) einen mit der Arbeitsplattform (24) verbundenen Antriebsabschnitt (22) aufweist, der mit einer stationären, planaren Antriebsebene (14) zusammenwirkt, **dadurch gekennzeichnet, dass** die Arbeitsplattform (24) eine Sperrfläche (66) aufweist, deren Abstand zu der Antriebsebene (14) durch Bewegung des Antriebsabschnitts (22) des Transportmovers (16) relativ zu der Antriebsebene (14) verändert wird, wobei die Sperrfläche (66) in einer einem kleineren Abstand zu der Antriebsebene (14) zugeordneten Übergabeposition so niedrig angeordnet wird, dass eine Übergabe von Behältnissen (46) von dem Übergabeende (56) der Zuführeinrichtung (50) über die Sperrfläche (66) hinweg in oder auf den Aufnahmebereich (34) der Arbeitsplattform (24) ermöglicht wird, und wobei die Sperrfläche (66) in einer einem größeren Abstand zu der Antriebsebene (14) zugeordneten Sperrposition so hoch angeordnet wird, dass eine Übergabe von Behältnissen (46) von dem Übergabeende (56) der Zuführeinrichtung (50) in oder auf den Aufnahmebereich (34) der Arbeitsplattform (24) gesperrt wird.

15. Verfahren nach Anspruch 14, wobei zumindest in einem Übergangszustand eine Übergabe von Behältnissen (46) von dem Übergabeende (56) in oder auf den Aufnahmebereich (34) der Arbeitsplattform (24) durch eine Mehrzahl von benachbart angeordneter Sperrflächen (66, 68) unterschiedlicher Transportmover (16, 18) gesperrt wird.

## Claims

1. Transport system (10) for a plurality of containers (46), comprising a feed device (50) for a supply (48) of containers (46) which can be received at a transfer end (56) of the feed device (50) by a receiving region (34) of a working platform (24) of a transport mover (16), the transport mover (16) having a drive portion (22) connected to the working platform (24) for the purpose of moving in a working plane (20), which drive portion cooperates with a stationary, planar drive plane (14), **characterized in that** the working platform (24) has a blocking surface (66), the distance of which to the drive plane (14) can be changed by moving the drive portion (22) of the transport mover (16) relative to the drive plane (14), the blocking surface (66), in a transfer position associated with a smaller distance to the drive plane (14), being arranged so low that a transfer of containers (46) from the transfer end (56) of the feed device (50) over the blocking surface (66) into or onto the receiving region (34) of the working platform (24) is made possible, and the blocking surface (66), in a blocking position associated with a greater distance to the drive plane (14), blocking a transfer of containers (46) from the transfer end (56) of the feed device (50) into or onto the receiving region (34) of the working platform (24).

2. Transport system (10) according to claim 1, **characterized in that** the change in the distance of the blocking surface (66) to the drive plane (14) is accompanied by a vertical movement of the transport mover (16) along a height axis of the transport mover (16) that is vertical to the drive plane (14).

3. Transport system (10) according to either of the preceding claims, **characterized in that** the change in the distance of the blocking surface (66) to the drive plane (14) is accompanied by a tilting movement of the transport mover (16) along a tilting axis (74) of the transport mover (16) that is parallel to the drive plane (14).

4. Transport system (10) according to any of the preceding claims, **characterized in that** the working platform (24) extends in a plane (62), **and in that** the blocking surface (66) is oriented at an angle to this plane (62).

5. Transport system (10) according to any of the preceding claims, **characterized in that** the blocking surface (66) is a boundary surface of the working platform (24).

6. Transport system (10) according to any of the preceding claims, **characterized in that** the working platform (24) has a boom region (26) which projects beyond the drive portion (22) and on which the blocking surface (66) is arranged.

7. Transport system (10) according to any of the preceding claims, **characterized in that** the receiving region (34) has a receiving surface (38) on which the containers (46) can be arranged, **and in that** the blocking surface (66) adjoins the receiving surface (38).

8. Transport system (10) according to claim 7, **characterized in that** the blocking surface (66) and the receiving surface (38) are oriented at an angle to each other.

9. Transport system (10) according to any of the preceding claims, **characterized in that** the receiving region (34) has boundaries (42) for receiving individual containers (46).

10. Transport system (10) according to any of the preceding claims, **characterized in that** the feed device (50) has a vibration device for transporting the containers (46) in the direction of the transfer end (56).

11. Transport system (10) according to any of the preceding claims, **characterized in that** the feed device (50) is arranged on an additional mover (58) which is independent of the transport mover (16) and which cooperates with the stationary, planar drive plane (14).

12. Transport system (10) according to any of the preceding claims, **characterized in that** the feed device (50) is designed as a conveyor trough (52) or has at least one conveyor trough (52).

13. Transport system (10) according to any of the preceding claims, **characterized in that** the transport system (10) has a further transport mover (18), the containers being able to be received by a receiving region (36) of a working platform (30) of the further transport mover (18), the further transport mover (18) having a drive portion (28) connected to the working platform (30) for the purpose of moving in the working plane (20), which drive portion cooperates with the stationary, planar drive plane (14), the working platform (30) having a blocking surface (68), the distance of which to the drive plane (14) can be changed by moving the drive portion (28) of the further transport mover (18) relative to the drive plane (14), the blocking surface (68), in a transfer position associated with a smaller distance to the drive plane (14), being arranged so low that a transfer of containers (46) from the transfer end (56) of the feed device (50) over the blocking surface (68) into or onto the receiving region (36) of the working platform (30) is made possible, and the blocking surface (68), in a blocking position associated with a greater distance to the drive plane (14), blocking a transfer of containers (46) from the transfer end (56) of the feed device (50) into or onto the receiving region (36) of the working platform (30).

14. Method for transporting a plurality of containers (46), in which a feed device (50) provides a supply (48) of containers (46) which are received at a transfer end (56) of the feed device (50) by a receiving region (34) of a working platform (24) of a transport mover (16), the transport mover (16) having a drive portion (22) connected to the working platform (24) for the purpose of moving in a working plane (20), which drive portion cooperates with a stationary, planar drive plane (14), **characterized in that** the working platform (24) has a blocking surface (66), the distance of which to the drive plane (14) is changed by moving the drive portion (22) of the transport mover (16) relative to the drive plane (14), the blocking surface (66), in a transfer position associated with a smaller distance to the drive plane (14), being arranged so low that a transfer of containers (46) from the transfer end (56) of the feed device (50) over the blocking surface (66) into or onto the receiving region (34) of the working platform (24) is made possible, and the blocking surface (66), in a blocking position associated with a greater distance to the drive plane (14), being arranged so high that a transfer of containers (46) from the transfer end (56) of the feed device (50) into or onto the receiving region (34) of the working platform (24) is blocked.

15. Method according to claim 14, wherein at least in a transition state, a transfer of containers (46) from the transfer end (56) into or onto the receiving region (34) of the working platform (24) is blocked by a plurality of adjacently arranged blocking surfaces (66, 68) of different transport movers (16, 18).

## Revendications

1. Système de transport (10) pour une pluralité de récipients (46), comprenant un dispositif d'alimentation (50) pour un réapprovisionnement (48) de récipients (46), qui peuvent être prélevés à une extrémité de transfert (56) du dispositif d'alimentation (50) d'une zone de réception (34) d'une plateforme de travail (24) d'un chariot de transport (16), dans lequel le chariot de transport (16) présente, en vue d'un déplacement dans un plan de travail (20), une section d'entraînement (22) reliée à la plateforme de travail (24), qui coopère avec un plan d'entraînement (14) stationnaire et plan, **caractérisé en ce que** la plateforme de travail (24) présente une surface de blocage (66) dont la distance par rapport au plan d'entraînement (14) peut être modifiée par le déplacement de la section d'entraînement (22) du chariot de transport (16) par rapport au plan d'entraînement (14), dans lequel la surface de blocage (66) est disposé dans une position de transfert associée à une distance plus petite par rapport au plan d'entraînement (14), suffisamment basse pour permettre un transfert de récipients (46) depuis l'extrémité de transfert (56) du dispositif d'alimentation (50) par-dessus la surface de blocage (66) dans ou sur la zone de réception (34) de la plateforme de travail (24), et dans lequel la surface de blocage (66) bloque, dans une position de blocage associée à une plus grande distance par rapport au plan d'entraînement (14), un transfert de récipients (46) depuis l'extrémité de transfert (56) du dispositif d'alimentation (50) dans ou sur la zone de réception (34) de la plateforme de travail (24).

2. Système de transport (10) selon la revendication 1,
**caractérisé en ce que** la modification de la distance de la surface de blocage (66) par rapport au plan d'entraînement (14) s'accompagne d'un mouvement vertical du chariot de transport (16) le long d'un axe vertical du chariot de transport (16), vertical par rapport au plan d'entraînement (14).

3. Système de transport (10) selon l'une des revendications précédentes, **caractérisé en ce que** la modification de la distance de la surface de blocage (66) par rapport au plan d'entraînement (14) s'accompagne d'un mouvement de basculement du chariot de transport (16) le long d'un axe de basculement (74) du chariot de transport (16) parallèle au plan d'entraînement (14).

4. Système de transport (10) selon l'une des revendications précédentes, **caractérisé en ce que** la plateforme de travail (24) s'étend dans un plan (62) et **en ce que** la surface de blocage (66) est orientée angulairement par rapport à ce plan (62).

5. Système de transport (10) selon l'une des revendications précédentes, **caractérisé en ce que** la surface de blocage (66) est une surface de délimitation de la plateforme de travail (24).

6. Système de transport (10) selon l'une des revendications précédentes, **caractérisé en ce que** la plateforme de travail (24) présente une zone en porte-à-faux (26) qui dépasse la section d'entraînement (22) et sur laquelle est disposé la surface de blocage (66).

7. Système de transport (10) selon l'une des revendications précédentes, **caractérisé en ce que** la zone de réception (34) présente une surface de réception (38) sur laquelle les récipients (46) peuvent être disposé, et **en ce que** la surface de blocage (66) est adjacente à la surface de réception (38).

8. Système de transport (10) selon la revendication 7,
**caractérisé en ce que** la surface de blocage (66) et la surface de réception (38) sont orientées angulairement l'une par rapport à l'autre.

9. Système de transport (10) selon l'une des revendications précédentes, **caractérisé en ce que** la zone de réception (34) présente des limitations (42) pour la réception de récipients (46) séparés.

10. Système de transport (10) selon l'une des revendications précédentes, **caractérisé en ce que** le dispositif d'alimentation (50) présente un dispositif de vibration pour le transport des récipients (46) en direction de l'extrémité de transfert (56).

11. Système de transport (10) selon l'une des revendications précédentes, **caractérisé en ce que** le dispositif d'alimentation (50) est disposé sur un chariot supplémentaire (58) indépendant du chariot de transport (16), qui coopère avec le plan d'entraînement (14) stationnaire et plan.

12. Système de transport (10) selon l'une des revendications précédentes, **caractérisé en ce que** le dispositif d'alimentation (50) est réalisé comme une goulotte de manutention (52) ou présente au moins une goulotte de manutention (52).

13. Système de transport (10) selon l'une des revendications précédentes, **caractérisé en ce que** le système de transport (10) présente un autre chariot de transport (18), dans lequel les récipients peuvent être prélevés d'une zone de réception (36) d'une plateforme de travail (30) de l'autre chariot de transport (18), dans lequel l'autre chariot de transport (18) présente, en vue d'un déplacement dans le plan de travail (20), une section d'entraînement (28) reliée à la plateforme de travail (30), qui coopère avec le plan d'entraînement (14) stationnaire et plan, dans lequel la plateforme de travail (30) présente une surface de blocage (68) dont la distance par rapport au plan d'entraînement (14) peut être modifiée par le mouvement de la section d'entraînement (28) de l'autre chariot de transport (18) par rapport au plan d'entraînement (14), dans lequel la surface de blocage (68) est disposé à une position de transfert associée à une distance plus petite par rapport au plan d'entraînement (14), suffisamment basse pour permettre un transfert de récipients (46) depuis l'extrémité de transfert (56) du dispositif d'alimentation (50) par-dessus la surface de blocage (68) dans ou sur la zone de réception (36) de la plateforme de travail (30), et dans lequel la surface de blocage (68) bloque, dans une position de blocage associée à une plus grande distance du plan d'entraînement (14), un transfert de récipients (46) depuis l'extrémité de transfert (56) du dispositif d'alimentation (50) dans ou sur la zone de réception (36) de la plateforme de travail (30).

14. Procédé pour le transport d'une pluralité de récipients (46), dans lequel un dispositif d'alimentation (50) fournit un réapprovisionnement (48) de récipients (46) qui sont reçus à une extrémité de transfert (56) du dispositif d'alimentation (50) par une zone de réception (34) d'une plateforme de travail (24) d'un chariot de transport (16), dans lequel le chariot de transport (16) présente, en vue d'un déplacement dans un plan de travail (20), une section d'entraînement (22) reliée à la plateforme de travail (24), qui coopère avec un plan d'entraînement (14) stationnaire et plan, **caractérisé en ce que** la plateforme de travail (24) présente une surface de blocage (66) dont la distance par rapport au plan d'entraînement (14) est modifiée par le déplacement de la section d'entraînement (22) du chariot de transport (16) par rapport au plan d'entraînement (14), dans lequel la surface de blocage (66) est placée à une position de transfert associée à une distance plus petite par rapport au plan d'entraînement (14), suffisamment basse pour permettre le transfert de récipients (46) depuis l'extrémité de transfert (56) du dispositif d'alimentation (50) par-dessus la surface de blocage (66) dans ou sur la zone de réception (34) de la plateforme de travail (24), et dans lequel la surface de blocage (66) est placée à une position de blocage associée à une plus grande distance du plan d'entraînement (14), à une hauteur telle qu'un transfert de récipients (46) depuis l'extrémité de transfert (56) du dispositif d'alimentation (50) dans ou sur la zone de réception (34) de la plateforme de travail (24) est bloqué.

15. Procédé selon la revendication 14, dans lequel, au moins dans un état transitoire, un transfert de récipients (46) de l'extrémité de transfert (56) dans ou sur la zone de réception (34) de la plateforme de travail (24) est bloqué par une pluralité de surfaces de blocage (66, 68) disposés de manière adjacente de différents chariots de transport (16, 18).
